# EUROPÄISCHE PATENTANMELDUNG

(11) **EP 2 660 289 A2**
(43) Veröffentlichungstag der Anmeldung: **06.11.2013**
(21) Anmeldenummer: 13166464.1
(22) Anmeldetag: 03.05.2013
(51) Int. Cl.: C08L 63/00, C08L 27/02, C08K 3/36

(54) **Bindemittelsystem**

(30) Priorität: 03.05.2012 DE 102012008959
(71) Anmelder: Nano-X GmbH, 66130 Saarbrücken (DE)
(72) Erfinder: Sepeur, Stefan, 66787 Wadgassen (DE); Laryea, Nora, 66113 Saarbrücken (DE); Wottke, Alexandra, 66386 St. Ingbert (DE)
(74) Vertreter: Teipel, Stephan

(57) **Zusammenfassung**

Die vorliegende Erfindung betrifft ein Bindemittelsystem, sowie ein Verfahren zur Herstellung dieses Bindemittelsystems.

## Beschreibung

Die vorliegende Erfindung betrifft ein Bindemittelsystem, sowie ein Verfahren zur Herstellung diese Bindemittelsystems.

Chitosan wird u.a. aufgrund seiner antibakteriellen Wirksamkeit auch in Mitteln zur Behandlung von Textilien und Fasern eingesetzt. Beim Aufbringen von chitosanhaltigen Präparaten auf Oberflächen, wie beispielsweise Fasern, ergibt sich jedoch das Problem, dass diese Präparate nach dem Aufbringen beispielsweise durch Abwaschen oder Ausbürsten leicht wieder entfernt werden.

Für die permanente Imprägnierung von Textilien und Fasern schlägt die DE 10 2007 017 303 daher vor, funktionelle Silane mit Chitosan über eine organische Seitenketten kovalent zu binden und mit dem so erhaltenen Polymer Fasern oder Textilien zu imprägnieren. Diese Imprägnierungsmittel weisen jedoch den Nachteil auf, dass sie einen dauerhaften Überzug bilden, der die Eigenschaften der Fasern negativ beeinflusst.

Auch die DE 10 2004 014 483 schlägt eine auswaschbeständige antimikrobielle Beschichtung vor, in der Chitosan in einer porösen Xerogelschicht vorliegt. Die Xerogelschicht wird dabei nach dem Sol-Gel-Verfahren mittels Hydrolyse entsprechender Alkoxysilanprecursor erhalten. Schon aufgrund der erhaltenen Schichtporosität und der damit verbundenen ungünstigen Oberflächeneigenschaften sind diese bekannten antimikrobiellen Beschichtungen als Zusammensetzungen insbesondere zur Behandlung von Fasern jedoch schlecht geeignet.

Die DE 10 2002 059 152 offenbart eine temperaturbeständige Antihaft-Schicht auf Basis der Sol-Gel-Technologie. Hierfür wird eine Beschichtungs-Zusammensetzung beschrieben, die über Hydrolyse/Kondensations-Reaktionen u.a. von funktionalisierten oder nicht-funktionalisierten Organosilanen erhalten wird. Die Zusammensetzung enthält Perfluorpolymere und optional eine strukturviskose Verbindung, bei der es sich um Chitosan handeln kann. Ein Bindemittelsystem, das epoxyhaltige Polymerpartikel, eine polymere Fluorcarbonverbindung und Chitosan notwendigerweise enthält, ist nicht offenbart und die DE 10 2004 059 152 gibt auch keinen Hinweis darauf, dass ein derartiges Bindemittelsystem besonders vorteilhaft für das Auftragen auf Fasern ist.

Es besteht somit weiterhin ein Bedürfnis nach weiteren Zusammensetzungen, die Chitosan enthalten und dabei die vorstehend genannten Nachteile nicht aufweisen. Insbesondere soll die Zusammensetzung nach dem Auftragen möglichst dauerhaft auf der Oberfläche beispielsweise von Fasern verbleiben und dabei deren Eigenschaften beispielsweise beim Ausbürsten oder sonstigen Be- oder Verarbeiten keinesfalls nachteilig und vorzugsweise sogar positiv beeinflussen.

Es wurde nun überraschend gefunden, dass diese sowie weitere Aufgaben durch ein Bindemittelsystem gelöst werden, das epoxyhaltige Polymerpartikel, eine polymere Fluorcarbonverbindung und Chitosan oder ein Salz oder Derivat davon umfasst. Die vorliegende Erfindung betrifft dementsprechend ein Bindemittelsystem gemäß Anspruch 1.

Das erfindungsgemäße Bindemittelsystem erzeugt einen hydrophoben, wasserabweisenden Schutzfilm, der insbesondere in der Kombination von Hitze-, UV- bzw. Farbschutz bekannte Zusammensetzungen übertrifft. Der sich nach dem Auftragen auf beispielsweise Fasern ausbildende Film ist wasserstabil (waschecht) und permanent bzw. semipermanent. Es wird angenommen, dass das eingesetzte epoxyhaltige Bindemittel eine Haftbrücke zwischen den weiteren Bestandteilen der Zusammensetzung und der Oberfläche, insbesondere Keratin-Oberfläche von natürlichen Fasern ausbildet.

Das Bindemittelsystem der vorliegenden Erfindung eignet sich damit beispielsweise zur Behandlung keratinischer Fasern, einschließlich Pelzen, Federn und Wolle. Das Bindemittelsystem kann dementsprechend beispielsweise für die Herstellung von Behandlungsmitteln zur Pflege, Reinigung und Färbung von Fasern zum Beispiel in Form von Cremes, Gelen, Färbe- und Behandlungskits, Bleichen und Tönungsmitteln eingesetzt werden.

Als epoxyhaltige Polymerpartikel eignen sich jedwede Polymerpartikel, die insbesondere auf ihrer Oberfläche epoxyfunktionelle Gruppen aufweisen. Mittels dieser Expoxygruppen können die Polymerpartikel nach dem Auftragen beispielsweise auf Fasern vernetzt werden, sodass die Partikel als Bindemittel für die sonstigen Bestandteile des Bindemittelsystems wirken. Sowohl die polymere Fluorcarbonverbindung als auch das Chitosan werden dadurch in eine Matrix vernetzter Polymerpartikel eingebunden, sodass die das Bindemittelsystem enthaltende Zusammensetzung für einen gewissen Zeitraum auf der Oberfläche verbleibt. Sowohl das Chitosan als auch die polymere Fluorcarbonverbindung sind dabei nicht kovalent mit den epoxyhaltigen Polymerpartikeln und der daraus resultierenden Matrix verbunden, sondern das erfindungsgemäße Bindemittelsystem enthält eine Mischung der epoxyhaltigen Polymerpartikel mit der polymeren Fluorcarbonverbindung und dem Chitosan, einem Salz oder Derivat davon. Nach dem Applizieren des Bindemittelsystems auf ein Substrat und dem anschließenden Aushärten vernetzen sich nur die epoxyhaltigen Polymerpartikel miteinander, ohne mit der polymeren Fluorcarbonverbindung und dem Chitosan zu reagieren, so dass die beiden letztgenannten zwar von der sich bildenden Matrix eingeschlossen werden, hiermit jedoch keine kovalente Bindung eingehen. Es wurde gefunden, dass dies den Vorteil hat, dass die so erhaltene Zusammensetzung durch Abbau der Matrix langsam degradiert und sich so nach einer gewissen Zeit von der Oberfläche praktisch rückstandsfrei löst.

Darüber hinaus wurde gefunden, dass die spezielle Kombination aus epoxyhaltigem Polymerpartikel, einer polymeren Fluorcarbonverbindung sowie Chitosan einen schützenden Überzug beispielsweise auf Fasern bildet, der gleichzeitig deren Ver- oder Bearbeitung unterstützt.

In einer bevorzugten Ausführungsform der vorliegenden Erfindung werden epoxymodifizierte Siliziumdioxidpartikel als epoxyhaltige Polymerpartikel eingesetzt. Entsprechende epoxymodifizierte Siliziumdioxidpartikel können beispielsweise durch Kondensation von epoxymodifizierten Alkoxysilanen erhalten werden. Hierzu werden die eingesetzten Alkoxysilane nach dem bekannten Sol-Gel-Verfahren miteinander verknüpft, wobei sich siliziumdioxidhaltige Partikel bilden, die auf ihrer Oberfläche Epoxyfunktionen aufweisen. Die Kondensation kann in Gegenwart von zwei oder mehreren unterschiedlichen epoxymodifizierten Alkoxysilanen und/oder in Gegenwart anderer, nicht epoxymodifizierter Silane, insbesondere Alkoxysilane erfolgen.

Darüber hinaus erfolgt die Kondensation vorzugsweise in Gegenwart anorganischer Oxidpartikel, wie beispielsweise Siliciumdioxid-, Aluminiumdioxid-, Zinkoxid- oder Titandioxidpartikel. Dies hat zur Folge, dass sich die epoxymodifiziertem Alkoxysilane auf der Oberfläche der anorganischen Oxidpartikel abscheiden. Hierdurch wird nur die Oberfläche der Polymerpartikel epoxymodifiziert. Durch Einsatz ausgewählter anorganischer Oxidpartikel lassen sich so beispielsweise die Größe der Polymerpartikel, die Partikelgrößenverteilung sowie deren Form gezielt einstellen. Dies ist bei der reinen Hydrolyse und Kondensation von epoxymodifizierten Alkoxysilanen ohne Zugabe anorganischer Oxidpartikel nur schwierig zu verwirklichen. Geeignete Partikelgrößen sind beispielsweise diejenigen der nachfolgend noch genannten Größen der epoxyhaltigen Polymerpartikel. Die Partikel können beispielsweise lamellar, nodular, plättchenförmig, stäbchenförmig, nadelförmig, hohlkugelförmig, kubisch, schalenförmig, sphärisch oder kugelförmig, bevorzugt sphärisch oder kugelförmig sein.

Daher betrifft die vorliegende Erfindung vorzugsweise ein Bindemittelsystem, das als epoxyhaltige Polymerpartikel anorganische Oxidpartikel enthält, deren Oberfläche mit epoxymodifizierten Alkoxysilanen modifiziert wurde. Entsprechend modifizierte anorganische Oxidpartikel sowie deren Herstellung sind beispielsweise in der WO 2005/090502 beschrieben.

Es wurde ferner gefunden, dass die zusätzliche Oberflächenstrukturierung durch die siliziumdioxidhaltigen Partikel in Verbindung mit den polymeren Fluorcarbonverbindungen eine gute Abschirmung von schädlichen Angriffen auf die Keratin-Oberfläche von beispielsweise natürlichen Fasern erzeugt.

Als epoxymodifizierte Alkoxysilane eignen sich beispielsweise Verbindungen der Formel

R¹R²ₙSi(OR)₃₋ₙ

worin n 0, 1 oder 2, vorzugsweise 0 oder 1 ist,
R¹ eine epoxyfunktionelle Gruppe ist,
R² Wasserstoff oder ein beliebiger organischer Rest wie beispielsweise C₁₋₅-Alkyl, Aryl (insbesondere Phenyl), Amino-C₁₋₅-alkyl, Cyclohexyl oder Vinyl ist und
RO C₁₋₅-Alkoxy, vorzugsweise Methoxy oder Ethoxy, besonders bevorzugt Ethoxy ist.

Bei der epoxyfunktionellen Gruppe R¹ kann es sich beispielsweise um eine Epoxyalkylgruppe handeln, deren Alkylgruppe mit einem oder mehreren Heteroatomen, wie Sauerstoff oder Stickstoff, unterbrochen sein kann. Die Alkylgruppe kann zudem mit einem oder mehreren Substituenten, wie beispielsweise Hydroxy, Amino, Carboxy oder Aryl, substituiert sein. Die Alkylgruppe kann geradkettig, verzweigt und/oder ringförmig vorliegen. Bevorzugte Alkylgruppen enthalten 1-20, insbesondere 1-10 Kohlenstoffatome außerhalb des Oxiranrings. Besonders bevorzugt wird die Alkylgruppe von einem Sauerstoffatom unterbrochen. Eine besonders bevorzugte epoxyfunktionelle Gruppe ist die Glycidoxypropylgruppe. Eine andere geeignete epoxyfunktionelle Gruppe ist eine Epoxycyclohexylalkylgruppe, worin die Alkylgruppe vorzugsweise 1 bis 6 Kohlenstoffatome enthält, wie beispielsweise (3,4-Epoxycyclohexyl)alkyl, insbesondere (3,4-Epoxycyclohexyl)ethyl.

Als epoxymodifizierte Alkoxysilane eignen sich beispielsweise 3-Glycidoxypropyltrimethoxysilan, 3-Glycidoxypropyltriethoxysilan, 3-Glycidoxypropylmethyldiethoxysilan und 2-(3,4-Epoxycyclohexyl)ethyltrimethoxysilane.

Als andere Silane, die zusammen mit dem epoxymodifizierten Silan eingesetzt werden können, eigen sich beispielsweise 3-Aminopropyltriethoxysilan, Aminoethylaminpropyltrimethoxysilan, Aminoethylaminopropyltrimethoxysilan, Aminoethylaminopropylsilan, 3-Aminopropyltrimethoxysilan, N-(2-Aminoethyl)-3-aminopropyltrimethoxysilan, N-(2-Aminoethyl)-3-aminopropylmethyldimethoxysilan, N-(2-Aminoethyl)-3-aminopropylmethyldimethoxysilan, N-Cyclohexyl-3-aminopropyltrimethoxysilan, Benzylaminoethylaminopropyltrimethoxysilan, Vinylbenzylaminoethylaminopropyltrimethoxysilan, Vinyltrimethoxysilan, Vinyltriethoxysilan, Vinyldimethoxymethylsilan, Vinyl(trismethoxyethoxy)silan, Vinylmethoxymethylsilan, Vinyltris(2-methoxyethoxy)silan, Vinyltriacetoxysilan, Methyltrimethoxysilan, n-Hexyltrimethoxysilan, n-Octyltriethoxysilan, Propyltrimethoxysilan, Propyltriethoxysilan, t-Butyltrimethoxysilan, Isobutyltriethoxysilan, Chloromethyltrimethoxysilan, Phenalytrimethoxysilan, Phenyltriethoxysilan, Mercaptopropyltrimethoxysilan, Bis-Triethoxysilylpropyldisulfidosilan, Bis-Triethoxysilylpropyldisulfidosilan, Bis-Triethoxysilylpropyltetroasulfidosilan, Tetraethoxysilan, N-Cyclohexylaminomethylmethyldieethoxysilan, N-Cyclohexylaminomethyltriethoxysilan, N-Phenylaminomethyltrimethoxysilan, (Methacryloxymethyl)methyldimethoxysilan, Methacryloxymethyltrimethoxysilan, (Methacryloxymethyl)methyldiethoxysilan, Methacryloxymethyltriethoxysilan, 3-Methacryloxypropyltrimethoxysilan, 3-Methacryloxypropyltrimethoxysilan, 3-Methacryloxypropyltriacetoxysilan, (Isocyanatomethyl)methyldimethoxysilan, 3-Isocyanatopropyltrimethoxysilan, 3-Trimethoxysilylmethyl-O-methylcarbamat, N-Dimethoxy-(methyl)silylmethyl-O-methyl-carbamat, 3-(Triethoxysilyl)propylbernsteinsäureanhydrid, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Octadecyl)methyldimethoxysilan, Phenyltriethoxysilan, (Cyclohexyl)methyldimethoxysilan, Dicyclopentyldimethoxysilan und Tetraethylsilan, sowie Mischungen von zwei oder mehreren dieser Silane.

Es hat sich herausgestellt, dass die epoxyhaltigen Polymerpartikel für das erfindungsgemäße Bindemittelsystem dann besonders geeignet sind, wenn sie 0,5 bis 10 Mol, bevorzugt 1 bis 5 Mol Epoxygruppen pro kg epoxhaltige Polymerpartikel enthalten.

In einer weiteren Ausführungsform weisen die epoxyhaltigen Polymerpartikel eine Größe im Bereich von 0,1 nm bis 10 µm, vorzugsweise im Bereich von 1 nm bis 2000 nm, stärker bevorzugt im Bereich von 1 nm bis 1000 nm und insbesondere im Bereich von 1 nm bis 100 nm, besonders bevorzugt im Bereich von 5 nm bis 60 nm oder 10 nm bis 50 nm wie beispielsweise etwa 10 nm oder etwa 50 nm, auf. Die Größe der Polymerpartikel wird dabei nach ISO 22412 mittels dynamischer Lichtstreuung (*Specialized analysis methods for multimodal size distributions and zeta potential*/*electrophoretic mobility distributions*) bestimmt.

Das Bindemittelsystem der vorliegenden Erfindung kann beispielsweise 0,1 bis 15 Gew.-%, vorzugsweise 0,1 bis 5 Gew.-% und besonders bevorzugt 0,3 bis 1,5 Gew.-% der epoxyhaltigen Polymerpartikel bezogen auf das Gesamtgewicht des Bindemittelsystems enthalten. Je nach Anwendungsgebiet können jedoch auch mehr oder weniger epoxyhaltige Polymerpartikel in dem Bindemittelsystem enthalten sein. Eine geeignete Menge kann vom Fachmann beispielsweise anhand der gewünschten Eigenschaften des erhaltenen Überzugs bestimmt werden.

Die epoxyhaltigen Polymerpartikel stellen in dem erfindungsgemäßen Bindemittelsystem ein Bindemittel für die Fluorcarbonverbindung sowie das Chitosan dar. Geeignete Bindemittel sind beispielsweise von der Nano-X GmbH unter der Bezeichnung x-bond^{®} E erhältlich. Bevorzugt werden lösungsmittelreduzierte Bindemittel aus der x-bond^{®} E Serie eingesetzt, insbesondere x-bond^{®} E 9013, x-bond^{®} E 9014, x-bond^{®} E 9017, x-bond^{®} E 9075, x-bond^{®} E 9076 und x-bond^{®} E 9077.

Das erfindungsgemäße Bindemittelsystem kann epoxyhaltige Polymerpartikel eines bestimmten Typs oder eine Mischung unterschiedlicher epoxyhaltiger Polymerpartikel enthalten.

Als polymere Fluorcarbonverbindung enthält das erfindungsgemäße Bindemittelsystem beispielsweise ein fluoralkylhaltiges Polymer, zum Beispiel Fluoralkylacrylatcopolymer, Polytetrafluorethylen (PTFE), Perfluoralkoxypolymer (PFA), Polytrifluorethylen, Polytrifluorchlorethylen sowie Copolymere oder Mischungen hiervon.

Bevorzugte polymere Fluorcarbonverbindungen weisen folgende chemische Formel auf:

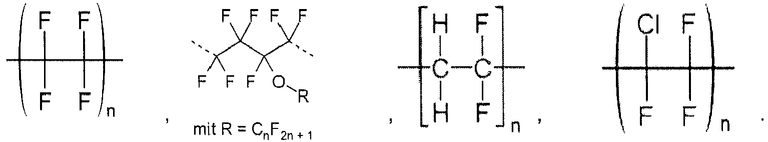

Geeignete polymere Flurocarbonverbindungen sind unter folgenden Handelsnamen erhältlich: Hexafor 6240, Hexafor 6280 (Maflon); Unidyne TG-5543, Unidyne TG 580, Unidyne TG 582 (Daikin); Anthydrin SC, Anthydrin NK (Zschimmer & Schwarz); Tubicoat HP 10 RT (CHT Beitlich); Dyneon PFA 6900 GZ, Dyneon PFA 6910 GZ, Dyneon TF 5032 Z, Dyneon TF 5035 Z und Dyneon TF 5050 Z (Dyneon 3M).

Die Menge der eingesetzten polymeren Fluorcarbonverbindung in dem erfindungsgemäßen Bindemittelsystem ist nicht besonders eingeschränkt und kann vom Fachmann in Abhängigkeit von den gewünschten Eigenschaften der Zusammensetzung frei gewählt werden. Beispielsweise kann das Bindemittelsystem 1 bis 50 Gew.-%, vorzugsweise 1 bis 25 Gew.-% der polymeren Fluorcarbonverbindung bezogen auf das Gesamtgewicht des Bindemittelsystems enthalten.

Die polymere Fluorcarbonverbindung kann in Form von Pulvern, Dispersionen oder Emulsionen eingesetzt werden.

Chitosan ist ein durch chemische oder enzymatische Abspaltung von Acetylgruppen aus Chitin gewonnenes Biopolymer. Chitosan kommt sowohl mit verschiedenen Molekulargewichten als auch mit unterschiedlicher Anzahl von Acetylgruppen vor. In der Regel weist Chitosan einen Deacetylierungsgrad > 40-50% auf. Die genaue Spezifikation des in dem vorliegenden Bindemittelsystem eingesetzten Chitosans ist von untergeordneter Bedeutung und kann vom Fachmann frei gewählt werden. Beispielsweise eignet sich das von C.E. Roeper erhältliche Chitosan.

Darüber hinaus können auch Salze oder Derivate von Chitosan eingesetzt werden. Als Chitosan-Derivate werden modifizierten Chitosane bezeichnet, die beispielsweise durch eine chemische Reaktion, z.B. alkyliert oder acyliert wurden. Es können auch Mischungen von Chitosan, Chitosansalz und/oder Chitosan-Derivaten eingesetzt werden.

Die Menge des eingesetzten Chitosans oder einem Salz oder Derivat davon ist wiederum nicht besonders eingeschränkt und kann vom Fachmann frei gewählt werden. Beispielsweise kann das erfindungsgemäße Bindemittelsystem 0,1 bis 10 Gew.-%, vorzugsweise 0,1 bis 2 Gew.-% Chitosan oder ein Salz oder Derivat davon bezogen auf das Gesamtgewicht des Bindemittelsystems enthalten.

Das vorliegende Bindemittelsystem kann darüber hinaus zusätzlich weitere Bestandteile, wie ein Lösungsmittel, eine Base oder Säure, vorzugsweise eine Säure und gegebenenfalls weitere beispielsweise für die Behandlung von Textilien und Fasern geeignete Bestandteile enthalten. Als Lösungsmittel eignen sich insbesondere wässrige Lösungsmittel, vorzugsweise Wasser, das gegebenenfalls einen Alkohol, insbesondere Ethanol, enthalten kann. Als Säure wird bevorzugt Essigsäure eingesetzt.

Die vorliegende Erfindung betrifft darüber hinaus ein Verfahren zur Herstellung des vorstehend beschriebenen Bindemittelsystem. Dieses Verfahren umfasst das Mischen eines Bindemittels, das epoxyhaltige Polymerpartikel enthält, mit einer polymeren Fluorcarbonverbindung und Chitosan oder einem Salz oder Derivat davon.

Die in dem Verfahren eingesetzten epoxyhaltigen Polymerpartikel, die polymere Fluorcarbonverbindung sowie das Chitosan oder Salz oder Derivat davon weisen die vorstehend beschriebenen bevorzugten Spezifikationen auf.

Vorzugsweise enthält das Bindemittel Wasser und epoxymodifizierte Siliziumdioxidpartikel. Das Bindemittel kann beispielsweise einen Feststoffgehalt im Bereich von 1 bis 90 Gew.-%, vorzugsweise im Bereich von 20 bis 60 Gew.-% bezogen auf das Gesamtgewicht des Bindemittels aufweisen. Darüber hinaus ist es vorteilhaft, wenn das Bindemittel eine Viskosität im Bereich von 5 bis 2000 mPas, vorzugsweise im Bereich von 10 bis 200 mPas aufweist, wobei die Viskosität des Bindemittels nach ISO 2555 gemessen wird.

Das Bindemittel kann zusätzlich bis zu 40 Gew.-%, bevorzugt bis zu 25 Gew.-% Alkohol, insbesondere Ethanol, bezogen auf das Gesamtgewicht des Bindemittels enthalten.

Bei der Herstellung des Bindemittelsystems können die einzelnen Bestandteile in beliebiger Reihenfolge zugegeben und gemischt werden.

Das Bindemittelsystem kann entweder direkt auf die zu behandelnde Faser oder Textilie aufgetragen werden oder es kann zur Herstellung eines entsprechenden Behandlungsmittels mit weiteren Bestandteilen, wie beispielsweise Pigmenten, Bleichmitteln, Antistatikmitteln, Verdickungsmitteln, Entschäumern, Substanzen zur Einstellung des pH-Werts, Fetten, Wachsen, Komplexbildnern, Quellmitteln, Trübungsmitteln, Reduktionsmitteln, Treibmitteln oder Antioxidantien, gemischt werden.

Nach dem Auftragen des Bindemittelsystems beispielsweise auf Fasern vernetzen sich die epoxyhaltigen Polymerpartikel über deren Epoxyfunktionen, sodass die Partikel für die polymere Fluorcarbonverbindung sowie das Chitosan eine Matrix bilden. Hierdurch entsteht ein Überzug, der die Faser zugleich schützt und beispielsweise die Ver- oder Bearbeitung erleichtert. Ein weiterer Vorteil des erfindungsgemäßen Bindemittelsystems ergibt sich daraus, dass die eingesetzten epoxyhaltigen Polymerpartikel bereits bei Raumtemperatur vernetzbar sind, so dass sich der gewünschte Überzug leicht und schnell bilden kann. Alternativ können die Polymerpartikel so gewählt werden, dass diese erst bei höheren Temperaturen vernetzen. So sind Vernetzungstemperaturen beispielsweise im Bereich von Raumtemperatur (ca. 21°C) bis etwa 250°C möglich.

Aufgrund seiner antibakteriellen Eigenschaften eignet sich das erfindungsgemäße Bindemittelsystem als antibakterielles Mittel oder zur Herstellung eines antibakteriellen Mittels, insbesondere zur Herstellung antibakterieller Antifingerprint-, Antistatik-, Korrosionschutz-, Kratzfestschutz-, Zunderschutzbeschichtungen, Antifoulingbeschichtungen, Antifoulingadditiven für Bootslacke, katalytisch aktiver Oberflächen, antistatischer Schichten oder hydrophiler Schichten mit Antibeschlageffekt, Pulverlacken, Sol-Gel-Lacken, Polymeren oder Siliconen.

Außerdem eignet sich das erfindungsgemäße Bindemittelsystem als oder in einem antibakteriell wirkenden Mittel auf Fasern, Textilien, oder anderen faserbasierten Flächen, Kunststoffen, insbesondere Polymeren, Metallen, Naturstoffen, wasserunlöslichen Faserproteinen insbesondere Holz, Stroh, Hanf, Sisal, Leder, Keratin, Kunstleder, Glas, keramischen oder mineralischen Untergründen.

Die vorliegende Erfindung wird anhand des nachfolgenden Beispiels näher erläutert.

### Beispiel 1:

21,3 g deionisiertes Wasser wurden vorgelegt und mit 0,2 g 100%iger Essigsäure versetzt. Danach erfolgte die Zugabe von 65 g einer 1 Gew.%igen Lösung aus CEROSAN^{®} Chitosan - Type 5000 (C.E. Roeper) in 5%iger Essigsäure. Das Gemisch wurde homogenisiert. Danach erfolgte die Zugabe von 1,9 g x-bond^{®} E 9017 (NANO-X) und 10,9 g Unidyne^{®} TG-580 (DAIKIN).

## Patentansprüche

1. Bindemittelsystem enthaltend
epoxyhaltige Polymerpartikel,
eine polymere Fluorcarbonverbindung und
Chitosan oder ein Salz oder Derivat davon.

2. Bindemittelsystem gemäß Anspruch 1, enthaltend epoxymodifizierte Siliziumdioxidpartikel als epoxyhaltige Polymerpartikel.

3. Bindemittelsystem gemäß Anspruch 2, worin die epoxymodifizierten Siliziumdioxidpartikel erhätlich sind durch Kondensation von epoxymodifizierten Alkoxysilanen.

4. Bindemittelsystem gemäß Anspruch 1, enthaltend als epoxyhaltige Polymerpartikel anorganische Oxidpartikel, deren Oberfläche mit epoxymodifzierten Alkoxysilanen modifiziert wurde.

5. Bindemittelsystem gemäß einem der vorhergehenden Ansprüche, worin die epoxyhaltigen Polymerpartikel 0,5 bis 10 Mol, bevorzugt 1 bis 5 Mol Epoxygruppen pro kg epoxhaltige Polymerpartikel enthalten.

6. Bindemittelsystem gemäß einem der vorhergehenden Ansprüche, worin die epoxyhaltigen Polymerpartikel eine Größe im Bereich von 0,1 nm bis 10 µm, vorzugsweise im Bereich von 1 nm bis 2000 nm aufweisen.

7. Bindemittelsystem gemäß einem der vorhergehenden Ansprüche, enthaltend 0,1 bis 15 Gew.-%, vorzugsweise 0,3 bis 1,5 Gew.-% epoxyhaltige Polymerpartikel bezogen auf das Gesamtgewicht des Bindemittelsystems.

8. Bindemittelsystem gemäß einem der vorhergehenden Ansprüche, worin die polymere Fluorcarbonverbindung ein fluoralkylhaltiges Polymer ist.

9. Bindemittelsystem gemäß Anspruch 8, worin das fluoralkylhaltige Polymer ein Fluoralkylacrylatcopolymer, ein Polytetrafluorethylen, ein Perfluoralkoxypolymer, ein Polytrifluorethylen, ein Polytrifluorchlorethylen sowie ein Copolymer oder Mischungen hiervon ist.

10. Bindemittelsystem gemäß einem der vorhergehenden Ansprüche, enthaltend 1 bis 50 Gew.-%, vorzugsweise 1 bis 25 Gew.-% der polymeren Fluorcarbonverbindung bezogen auf das Gesamtgewicht des Bindemittelsystems.

11. Bindemittelsystem gemäß einem der vorhergehenden Ansprüche, enthaltend 0,1 bis 10 Gew.-%, vorzugsweise 0,1 bis 2 Gew.-% Chitosan oder ein Salz oder Derivat davon bezogen auf das Gesamtgewicht des Bindemittelsystems.

12. Bindemittelsystem gemäß einem der vorhergehenden Ansprüche, zusätzlich enthaltend ein wässriges Lösungsmittel, eine Säure, und gegebenenfalls weitere kosmetisch verträgliche Bestandteile.

13. Bindemittelsystem gemäß Anspruch 12, worin die Säure Essigsäure ist.

14. Verfahren zur Herstellung eines Bindemittelsystems gemäß einem der Ansprüche 1-13, umfassend das Mischen eines Bindemittels, das epoxyhaltige Polymerpartikel enthält, mit einer polymeren Fluorcarbonverbindung und Chitosan oder einem Salz oder Derivat davon.

15. Verfahren gemäß Anspruch 14, worin das Bindemittel Wasser und epoxymodifizierte Siliziumdioxidpartikel enthält.

16. Verfahren gemäß Anspruch 14 oder 15, worin das Bindemittel ein Feststoffgehalt im Bereich von 1 bis 90 Gew.-%, vorzugsweise im Bereich von 20 bis 60 Gew.-% bezogen auf das Gesamtgewicht des Bindemittels aufweist.

17. Verfahren gemäß einem der Ansprüche 14 bis 16, worin das Bindemittel eine Viskosität im Bereich von 5 bis 2000 mPas, vorzugsweise im Bereich von 10 bis 200 mPas aufweist.

18. Verfahren gemäß einem der Ansprüche 14 bis 17, worin das Bindemittel zusätzlich bis zu 40 Gew.-% Alkohol, bevorzugt bis zu 25 Gew.-%, Alkohol, insbesondere Ethanol, bezogen auf das Gesamtgewicht des Bindemittels enthält.

19. Verwendung des Bindemittelsystems gemäß einem der Ansprüchen 1 bis 13 als antibakterielles Mittel oder zur Herstellung eines antibakteriellen Mittels, insbesondere zur Herstellung antibakterieller Antifingerprint-, Antistatik-, Korrosionschutz-, Kratzfestschutz-, Zunderschutzbeschichtungen, Antifoulingbeschichtungen, Antifoulingadditiven für Bootslacke, katalytisch aktiver Oberflächen, antistatischer Schichten oder hydrophiler Schichten mit Antibeschlageffekt, Pulverlacken, Sol-Gel-Lacken, Polymeren oder Siliconen.

20. Verwendung des Bindemittelsystems gemäß einem der Ansprüche 1 bis 13 als oder in einem antibakteriell wirkenden Mittel auf Fasern, Textilien, oder anderen faserbasierten Flächen, Kunststoffen, insbesondere Polymeren, Metallen, Naturstoffen, wasserunlöslichen Faserproteinen insbesondere Holz, Stroh, Hanf, Sisal, Leder, Keratin, Kunstleder, Glas, keramischen oder mineralischen Untergründen.
